(19) Europäisches Patentamt

European Patent Office

Office européen des brevets

(11) Publication number: **0 216 628 B1**

## (12) EUROPEAN PATENT SPECIFICATION

(45) Date of publication of patent specification: **22.07.92** (51) Int. Cl.⁵: **G01N 17/00**

(21) Application number: **86307283.1**

(22) Date of filing: **22.09.86**

---

(54) Corrosion detection.

---

(30) Priority: **24.09.85 GB 8523553**
　　　　**06.12.85 GB 8530133**

(43) Date of publication of application:
**01.04.87 Bulletin　87/14**

(45) Publication of the grant of the patent:
**22.07.92 Bulletin　92/30**

(84) Designated Contracting States:
**AT BE CH DE FR GB IT LI LU NL SE**

(56) References cited:
**EP-A- 0 199 867**
**US-A- 3 745 452**
**US-A- 3 978 716**
**US-A- 3 999 121**

(73) Proprietor: **COLEBRAND LIMITED**
**Colebrand House 20 Warwick Street Regent Street**
**London, W1R 6BE(GB)**

(72) Inventor: **Winnett, Michael Arnhem**
**18 Sylvanas Roman Wood**
**Bracknell Berkshire(GB)**
Inventor: **Daley, Edward**
**1 Grange Avenue Barrowford**
**Nelson Lancashire(GB)**

(74) Representative: **Johnson, Terence Leslie et al**
**Edward Evans & Co. Chancery House 53-64**
**Chancery Lane**
**London WC2A 1SD(GB)**

EP 0 216 628 B1

## Description

The invention relates to corrosion detection, particularly that of steel in reinforced concrete structures.

Steel corrodes in concrete by an electrochemical process which involves the development of anodic, or corroding, and cathodic (passive) sites on the steel surface.

Thus regions of differing electrical potential and associated current flow patterns are established in the concrete. The effective measurement of the potentials and current densities allows a complete evaluation of the corrosion process occurring in the reinforcement. At present there appears to be little prospect of surveying a structure for corrosion current densities but potential can be surveyed . Hence although it can be possible to locate corroding steel in a potential survey, the rate of corrosion has not yet been quantifiable.

Potential survey methods were first used to find corrosion in buried pipelines. The method and its application to reinforced concrete was then developed for investigating corrosion in bridge decks. The general methodology of potential surveys is based on fundamental electrochemical principles, but the correlation between potential values and the risk of corrosion is empirical. It has been derived from a large number of measurements carried out on test specimens and salted bridge decks. The values, often called 'Van Deveer' criteria, have normally proved to be satisfactory for bridge decks, the structural element most frequently surveyed in developing potential (E) of a half cells used to determine that potential. Thus: E <-350mV greater than 95%

probability of corrosion
E <-200mV approximately 50%
-350mV < probability of corrosion
E >-200mV less than 5%
probability of corrosion.

Over the years, as problems have developed in other parts of bridges and in other structures (e.g. buildings houses, multi-storey offices), car parks, swimming pools, cooling towers, oil platforms, etc.), the potential survey method has been more widely used usually giving good correlation between potential value and risk of corrosion. This is because the measurement of potential at the surface is non-destructive of the structure being surveyed.

In order to obtain a map of iso-potential contour lines across a structure or part thereof which would provide an accurate indication of the corrosion process throughout the structure, an effective measuring apparatus of half cells is necessary. Such an apparatus must be quickly and easily movable between various contact points in the structure regardless of the irregularity of its surface and should be capable of taking accurate potential measurements, irrespective of its orientation in relation to the structure.

The prior art discloses a number of measuring apparatus but none afford the required level of flexibility of movement or independence of orientation described above.

US-A-3 745452 shows a method of detecting corrosion currents in underground pipelines using a magnetic field sensing mechanism. The magnetic sensors in this case are rigidly mounted on a platform. In practice this means that the sensors can snag on projections or uneven surfaces, thus giving a false reading. In addition the apparatus does not allow application of the apparatus on a surface of any orientation.

US-A-3 999121 discloses apparatus for making a surface measurement of well casing external corrosion current including a voltmeter, a variable current source, a reference electrode and a ground electrode. Although the apparatus can measure potential accurately using surface contacts only, no means are suggested in the document for moving the apparatus efficiently between various contact points. It is also not feasible to apply the apparatus to surfaces of different orientations.

Accordingly, it is an object of the invention to seek to provide apparatus which can overcome the disadvantages of the prior art.

According to the invention there is provided apparatus for use in determining potential differences in a structure, comprising a plurality of half cells each having a body for containing a supersaturated electrolyte, an electrode which extends into the body for immersion in the electrolyte, and means for transmitting electrolyte to a surface of a structure, each containing electrolyte, a support adapted to hold the plurality of half cells at predetermined spacings, electronic means for monitoring the outputs of the half cells, and means to connect the plurality of half cells with the electronic monitoring means, characterised in that the support comprises a bar with a slide-way, in that there is a clamp for each half cell receivable in the slide-away and for gripping a half cell, in that the means for transmitting electrolyte to a surface of the structure comprises a wooden plug having a conical nose spaced from a free end of the electrode, which plug has a hollow extension, in that each half cell is adjustably mounted on the bar by a clamp, in that there are alternate electrical socket connectors comprising the means to connect alternate ones of the plurality of half cells with the electronic means, and in that there is a device for moving the apparatus bodily over a structure.

According to a second aspect of the invention there is provided a system for determining corrosion of a structure, comprising a structure including an embedded corrodible element; and apparatus as hereinbefore defined applied to a surface of the structure to determine potential differences and thus under surface corrosion of the element embedded in the structure.

The electronic means may comprise an electronic data processor and a printer.

The electronic means may comprise an electronic data processor and a data storage means.

The data storage means may be removable, for subsquent analyses of data stored thereon.

The data storage means may alternatively be removable and include means for interfacing with a mainframe computer.

The support may comprise a bar with a slideway, a clamp for each half cell receivable in the slideway and for gripping a half cell, and an electrical socket connector comprising the means to connect the plurality of half cells with the electronic means.

There may be a further bar which is connectable in spaced, substantially parallel relating with the first mentioned bar whereby to provide a support structure for supporting the half cells in two substantially parallel rows. Each bar may be an aluminium extrusion, the slide way of each bar being directed in one direction and there being a further slideway directed in an opposite direction to the one direction, whereby the two bars may be connected together by spacer elements.

The bar may be an aluminium extrusion wherein the slide way is directed in one direction and there being a further slideway directed in an opposite direction to the one direction, whereby the two bars may be connected together by spacer elements.

The bar may be an aluminium extrusion whrein the slide way is directed in one direction and wherein there is a further slide way directed in an opposite direction to the one direction, whereby the bar may be connected with a device for moving the apparatus over a structure.

The device may comprise a wheeled frame.

Apparatus embodying the invention is hereinafter described, by way of example, with reference to the accompanying drawings, in which:-

Fig. 1 is a side elevational view of one embodiment of half cell according to the invention;

Fig. 1A is a schematic side elevational view of a second embodiment of half cell according to the invention;

Fig. 2 is a front view of apparatus according to the invention utilising a plurality of the half cells of Fig. 1;

Fig. 3 is a rear view of the apparatus of Fig. 2;

Fig. 4 shows schematically a plan view of the apparatus of Figs. 2 and 3,

Fig. 5 shows schematically a plan view of a second embodiment of apparatus according to the invention;

Fig. 6 shoes an electronic monitor of the apparatus, and

Fig. 7 shorts a typical print out using the half cells of Fig. 1.

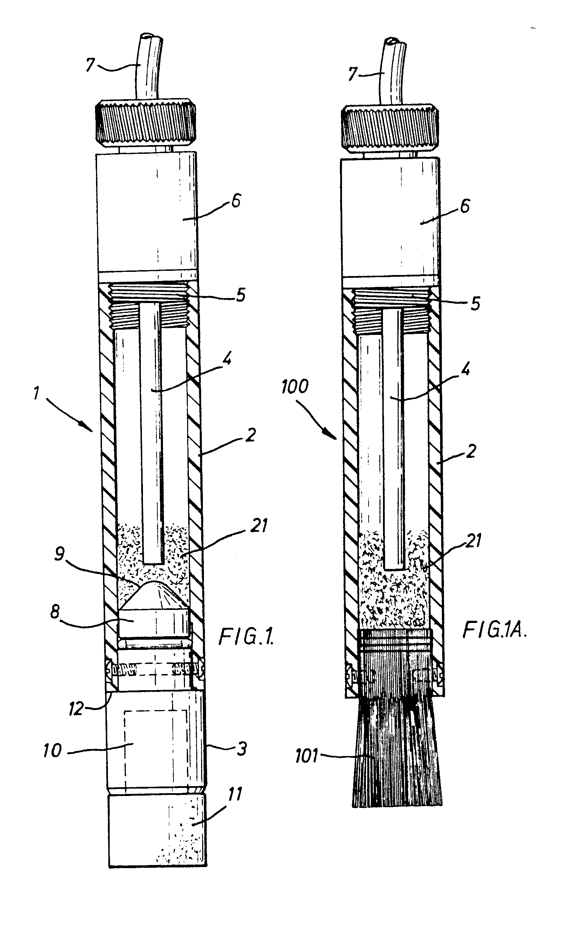

Referring to the drawings, the half cell 1 shown in Fig. 1, comprises a body for containing electrolyte which has a part impervious to liquid and contains same, an absorbent part 3 which provides a surface for contacting a structure to be surveyed, and which forms at least part of a boundary surface of the part 2, and an electrode 4, which is copper and which terminates at a free end spaced from the part 3.

In the embodiment shown, the impervious body part 2 is a cylindrical transparent plastics tube which is threaded at one end 5 to receive a screw threaded plug 6 which carries the electrode 4, which has an electrical connection lead 7 leading therefrom. The threads also provide a marker to show the level to which the electrolyte should be filled. The porous part 3 closes the opposite end of the tube 2 and itself comprises two parts, namely a wooden plug 8 having a conical nose 9 extending towards the electrode 4, which plug 8 has a hollow extension 10 (shown by dashed lines) in which a sponge 11, usually a hard sponge is received in close-fitting engagement. The sponge 11 is removable, and when removed the extension 10 can be housed in a protective sheath such as a rubber sleeve which can be pushed over the extension 10 as far as the base (as viewed) of the tube 2.

The extension 10 has a shoulder 12 which butts against the end of the tube 2 with the nose 9 then projecting into the tube 2.

There is a seal such as 'O'-ring intermediate the length of the nose to seal against the inner surface of the tube to obviate leakage. The part 8 is secured in the tube by plastic (non-conductive) screws (not shown) which are screwed through the wall of the tube 2 into the nose part 8.

The tube 2 and plug 3 have substantially the same external diameter as shown.

Apparatus 13 for determining potentials in a standing structure comprises a plurality of the half cells 1 of Fig. 1, a support therefor 14, electrical connection means 15 for connecting the half cells, an electronic means 16 for determining the potentials detected by the half cells and means 17 for connecting the array of half cells with the electronic means, which may include a printer.

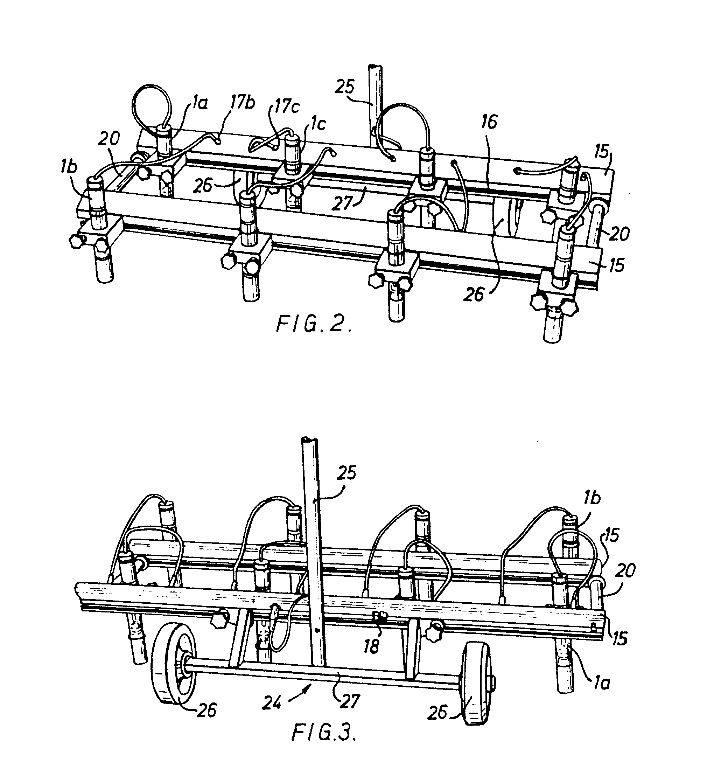

The support is an aluminium extrusion with a part of generally H-configuration 15 in cross-section, the limbs of the pair of limbs of the 'H' being angled towards each other at the free ends to provide two slide ways in one 16 of which the half cells 1 are received as shown in Figs. 2-5. The extrusion 15 also has eight electrical sockets 17, one for each lead 7 from a respective one of eight half cells 1 the apparatus being designed to operate with eight half cells 1. The extrusion also has a 12-pin 18 socket connector for connection with the electronic data monitoring means 16, which is battery operated. There is also an electrical connection 19 for the extrusion 15 itself.

The apparatus 13 may be arranged in a "parallel" kind of array of the eight half cells, as shown in Figs. 2-4, or in an on line or series or sequential arrangement as shown in Fig . 5.

In the embodiment of Figs. 2-4, two aluminium extrusions 15 are held in a parallel arrangement by two spaced paralled spacer bars 20 which are received in facing guideways 16 of the two extrusions 15.

In operation to provide an iso-contour map of a reinforced concrete structure, eight half cells 1 are taken, each of which contains copper sulphate crystals 21. The plug or caps 6 holding the electrode is removed from each one by unscrewing, and distilled or de-ionised water poured into each one up to the level of the marker in each case (the screw thread 5), and the plastic cap 6 is replaced by screwing. The half cells 1 are each shaken well and left to stand, preferably overnight to saturate the plug 3. The cell is then topped up with water and/or copper sulphate crystals as necessary to ensure a supersaturated solution of copper sulphate electrolyte, and immediately before use the wooden plug 10 and sponge 11 are also thoroughly soaked in clean tap water.

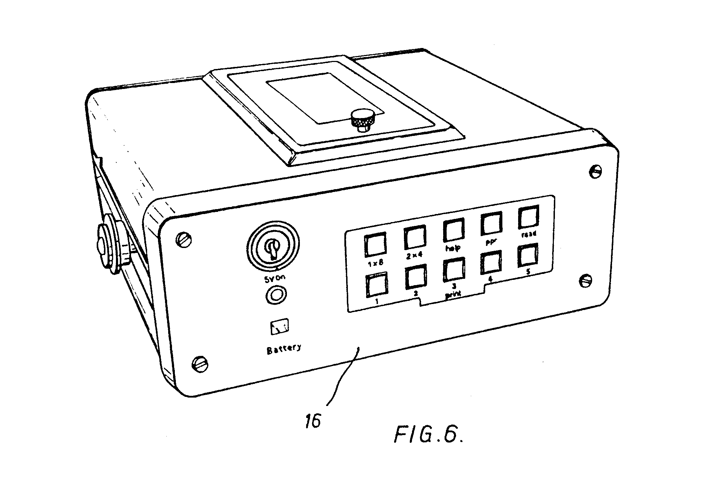

The half cells 1 are then mounted on either two support bars 15 (Figs. 2-4) or a single support bar (Fig. 5) by passing them through a respective hole 22 in a clamp 23 which is mounted in the slideway 16. The clamps 23 have adjustable tightening knobs 24 to secure the half cells 1 in the apertures 22 and projections which are complementary to the shape of the slideway for sliding therealong. The half cells are adjusted in position to provide equal pitches 'A', as shown in Figs. 2-5 .

In the embodiment of Figs. 2-4, the half cells 1 are all connected by their electrical leads 7 to one support (the rear one in use), the four half cells on one support being connected to respective alternate electrical sockets, and the half cells of the other support being connected with respective alternate sockets. Thus half cell 1a is connected to socket 17a, half cell 17 is connected, to socket 17b and half cell 1c is connnected to socket 17c, and so on.

In the embodiment of Fig. 5, the half cells 1 are connected in series, with each half cell being connected with a respective adjacent socket, so that half cell 1a is connected with the first socket, 17a, half cell 1b is connected with the second socket 17b and so on.

Where the apparatus 13 can be applied downwardly on a structure being investigated, there may be a wheeled transport device 14 which has a handle, wheels 26, and frame 27 for slidable releasable lockable connecton with a slide way opposite the slideway 16 of one extrusion 15 carrying the half cells (Figs. 2-4) or of the extrusion 15 (Fig. 5).

The handle 25 includes a switch (not shown) and there is an electrical lead 27 connecting the switch to the apparatus.

The electronic determining means or microprocessor 16 may be carried round the neck of the operator of the apparatus 13 by a strap. The operator in use of the apparatus to determine potentials of the struture moves the apparatus over the surface on the wheels 26 previously dampened with clean water and takes a series of readings.

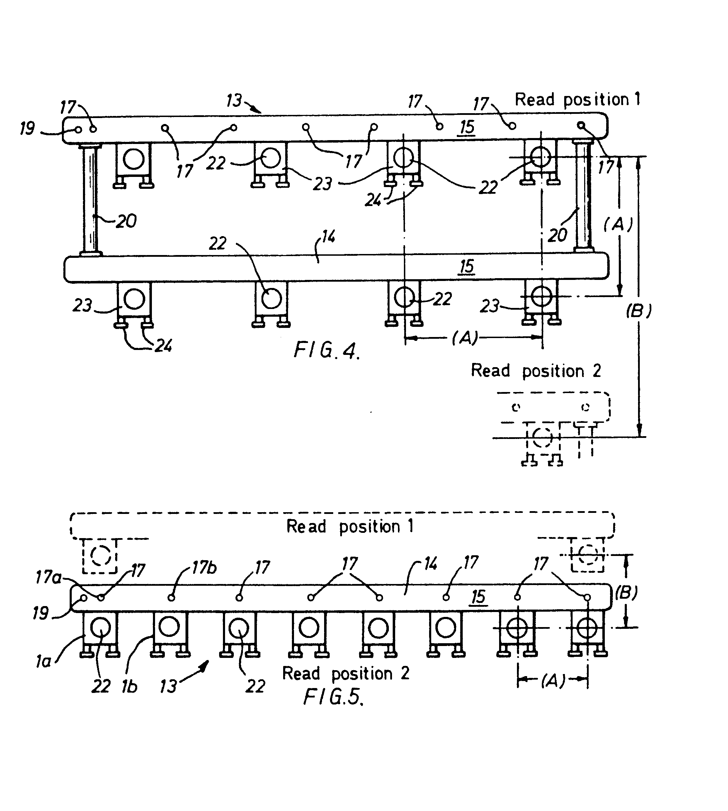

In the first embodiment the apparatus is moved between positions such that each read position is spaced from the immediately preceding one by a distance "B" which is twice the pitch "A" between half cells, as shown in Fig. 4 where the second position "Read Postion 2" is shown in dashed lines.

In use of the embodiment of Fig. 5, the distance 'B' between successive read positions is equal to the pitch A.

Thus the first embodiment gives faster cover of the surface, as the distance between readings is twice as great as the in the second embodiment. The area to be covered can thus be covered in half the time, using the first embodiment.

However, the apparatus need not be used by applying downwardly to a surface. The half cells 1 can equally be applied to an overhead surface, that is vertically upwardly, or to an inclined or upright surface such as a wall or leg of a bridge, oil rig or the like. In every embodiment the soaked firm sponges 11 give a firm substantially 100% contact area with the surface and allow the apparatus to remain level as they accommodate surface irrularities. The apparatus is thus orientation independent, and can be used in any attitude.

To assist an operator in a scan of a surface, he or she may lay out a grid of spacings each equal to "A" or "2A" depending on which embodiment is being used then moves the apparatus by a grid spacing at a time to take a reading.

The potentials in the structure produce movement of ions from the potential site, through the sponge and electrolyte of the half cells 1 to provide an electrical output read by the electronic means 16.

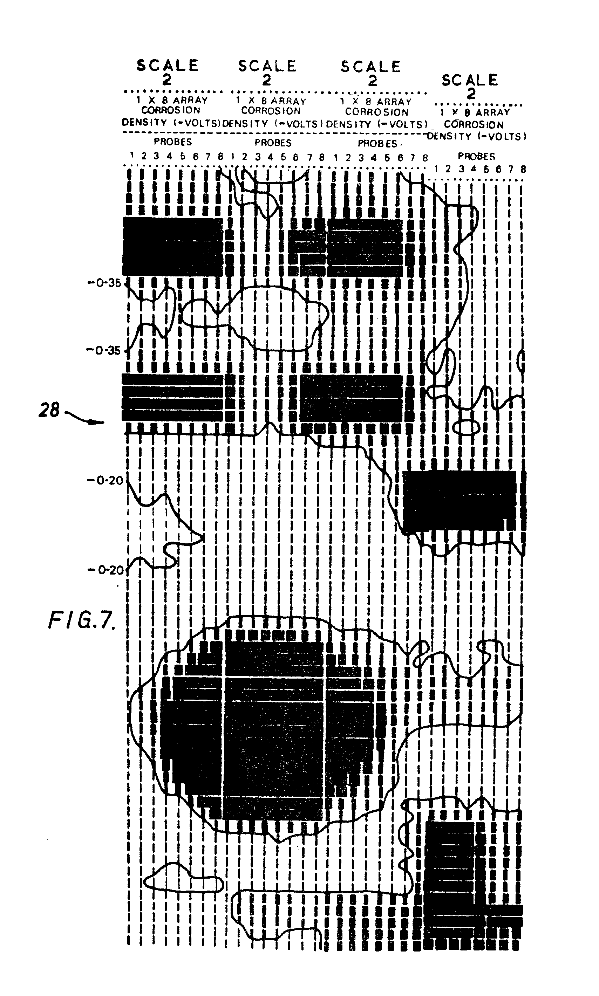

Once a series of readings has been taken and a print out obtained the print outs can be applied, after cutting into strips, to a backing sheet, to give an iso-potential contour map like the one 28 shown in Fig. 7 the higher the negative potential values recorded the greater the probability of there being corrosion present.

Thus the multi-half-cell device of the apparatus provides a 3-dimensional analysis fo the 2-demensional area, the analyses giving an indication of the intensity of density of corrosion. Stated in another way, the voltages read provide an equipotential or iso-potential contour map of the structure.

Although the microprocessor 16 has been described as being provided with a printer/or a site readings, and with a RAM whereby once it is switched off the data in its memory is lost, in an alternative the data recieved from each half all can be stored on an EPROM or on a battery backed-up RAM, (or any other suitable permanent form of storage) which can be processed and/or interpreted separately at a remote location such as an office removed from the structure under investigation. Thus the store may be a centronics kind of store with a parallel interface or a serial connection for connection with a mainframe computer which can process the data and provide a printed contour map of corrosion probability.

The half cell may work on the silver Calomel/Silver Chloride solution, or any other suitable system rather than the copper sulphate/copper electrode system described.

The embodiment of half cell 100 shown in Fig. 1A is similar to that of Fig. 1, and can equally be used in the apparatus of Figs. 2-4, or Fig. 5 so description thereof will not be repeated, and similar reference numerals refer to similar integers. In the half cell 100, there is filamentary means 101 for transmitting electrolyte to a surface of a structure, rather than the sponge 11. The filamentary means 101 comprise a plurality of filaments or bristles which are non-absorbent of the electrolyte. In this embodiment, electrolyte passes down the exterior of the bristles 101 to "wet" the structure to complete the circuit when the filaments or bristles are "wiped" over the surface of the structure. Alternatively the bristles are fine tubes in which case the electrolyte passes down the interior of the tubes. In each case electrolyte flows to the surface of the strucutre. When the bristles are "wiped" over the structure. The flexible nature of the bristle or filaments ensures comprehensive contact with the structure, and enhances electrolyte movement by capillary action to the brush top.

The filaments or bristles may be synthetic plastic material, such as nylon.

## Claims

1. Apparatus for use in determining potential differences in a structure, comprising a plurality of half cells each having a body for containing a supersaturated electrolyte, an electrode which extends into the body for immersion in the electrolyte, and means for transmitting electrolyte to a surface of a structure, each containing electrolyte, a support adapted to hold the plurality of half cells at predetermined spacings, electronic means for monitoring the outputs of the half cells, and means to connect the plurality of half cells with the electronic monitoring means, characterised in that the support (14) comprises a bar (15) with a slide-way, in that there is a clamp for each half cell (1, 100) receivable in the slide-way and for gripping a half cell, in that the means (3) for transmitting electrolyte to a surface of a structure comprises a wooden plug (8) having a conical nose (9) spaced from a free end of the electrode (4) which plug 8 has a hollow extension (10), in that each half cell (1) is adjustably mounted on the bar (15) by a clamp, in that there are alternate electrical socket connectors (17a, 17b, 17c) comprising the means to connect alternate ones of the plurality of half cells (1, 100) with the electronic means (16), and that there is a device (26, 27) for moving the apparatus bodily over a structure.

2. Apparatus according to Claim 1, characterised in that there is a further bar (15) which is connectable in spaced, substantially parallel relation with the first-mentioned bar (15) whereby to provide a support structure for supporting the half cells (1, 100) in two substantially parallel rows.

3. Apparatus according to Claim 2, characterised in that each bar (15) is an aluminium extrusion, in that the slide-way of each bar (15) is directed in one direction and in that there is a further slide-way directed in an opposite direction to the one direction, whereby the two bars (15) may be connected together by spacer elements (20).

4. A system for determining corrosion of a structure, comprising a structure including an embedded corrodible element characterised by apparatus according to any of Claims 1-3 applied to a surface of the structure to determine potential differences and thus under surface corrosion of the element embedded in the structure.

## Revendications

1. Appareil pour déterminer des différences de potentiel dans une structure, comprenant une pluralité de demi-piles, chacune étant constituée d'un corps contenant un électrolyte sursaturé, une électrode plongée en immersion à l'intérieur du corps dans l'électrolyte, et des moyens de transmettre l'électrolyte à la surface d'une structure et qui contiennent chacun un électrolyte, un support adapté pour maintenir les demipiles à des distances pré-déterminées, des moyens électroniques pour commander les sorties des demi-piles, et des moyens de connecter les demi-piles avec les moyens électroniques de commande, caractérisé en ce que le support (14) comporte une barre (15) constituant glissière, en ce qu'il existe une pince prévue pour chaque demi-pile (1, 100) destinée à venir dans la glissière pour pincer une demi-pile, en ce que les moyens (3) de transmission de l'électrolyte à la surface d'une structure comprennent un tampon en bois (8) à tête conique (9), se trouvant à une certaine distance de l'extrémité libre de l'électrode (4), le tampon (8) comportant un prolongement creux (10), en ce que chaque demi-pile (1) peut être réglée sur la barre (15) au moyen d'une pince, en ce qu'il existe des Liaisons électriques (17a, 17b, 17c) comportant des moyens de brancher l'ensemble des demi-piles (1, 100) aux moyens électroniques (16), et en ce qu'il existe un dispositif (26, 27) destiné à déplacer le corps de l'appareil sur une structure.

2. Appareil selon la revendication 1, caractérisé en ce qu'il comporte une seconde barre (15) reliée à la première barre (15) dans une disposition parallèle et espacée, de façon à former une structure de support pour maintenir les demi-piles (1, 100) en deux rangées substantiellement parallèles.

3. Appareil selon la revendication 2, caractérisé en ce que chaque barre (15) est en aluminium extrudé, en ce que la glissière de chaque barre (15) est orientée dans un sens et en ce qu'il est prévu une seconde glissière orientée dans un sens opposé à la première, les deux barres (15) pouvant être reliées entre elles par des entretoises (20).

4. Système pour déterminer la corrosion d'une structure, comprenant une structure dans laquelle est enfoncé un élément corrosif, caractérisé en ce que l'appareil selon l'une quelconque des revendications 1 à 3 est appliqué à la surface d'une structure pour déterminer des différences de potentiel et ainsi la corrosion sous la surface de l'élément enfoncé dans la structure.

**Patentansprüche**

1. Vorrichtung zur Bestimmung von Potentialunterschieden in einem Bauwerk, bestehend aus einer Mehrzahl von Halbzellen, deren jede einen Aufnahmebehälter für übersättigten Elektrolyt, eine Elektrode, die in den Aufnahmebehälter hineinreicht und in den Elektrolyt eintaucht, und eine Einrichtung zum Transport von Elektrolyt zu einer Oberfläche des Bauwerks aufweist und Elektrolyt enthält, aus einem Träger zur Halterung der Halbzellen in vorbestimmten Abständen, elektronischen Einrichtungen zur Überwachung der Meßwerte der Halbzellen und aus Einrichtungen zur Verbindung der Mehrzahl von Halbzellen mit den elektronischen Überwachungseinrichtungen, dadurch gekennzeichnet, daß der Träger (14) eine Leiste (15) mit einer Gleitschiene besitzt, daß für jede Halbzelle (1, 100) eine in der Gleitschiene aufnehmbare Klammereinrichtung zur Halterung einer Halbzelle vorhanden ist, daß die Einrichtung (3) zum Transport von Elektrolyt zu einer Oberfläche des Bauwerks einen hölzernen Stopfen (8) mit einer konischen Nase (9) im Abstand vom freien Ende der Elektrode (4) aufweist, wobei der Verschluß (8) eine hohle Verlängerung (10) aufweist, daß jede Halbzelle (1) auf der Leiste (15) durch eine Klammer verschiebbar gehalten ist, daß alternierende elektrische Anschlußverbindungen (17a, 17b, 17c) mit Einrichtungen zum Verbinden abwechselnder Halbzellen (1, 100) mit den elektronischen Einrichtungen (16) vorgesehen sind, und daß ein Mechanismus (26, 27) vorgesehen ist, um die Vorrichtung als Ganzes über das Bauwerk zu fahren.

2. Vorrichtung entsprechend Anspruch 1, dadurch gekennzeichnet, daß eine weitere Leiste (15), die mit der erstgenannten Leiste (15) in etwa parallelem Abstand von dieser verbindbar ist, vorgesehen ist, und daß dadurch eine Trageeinrichtung zur Halterung der Halbzellen (1, 100) in zwei im wesentlichen parallelen Reihen gebildet ist.

3. Vorrichtung entsprechend Anspruch 2, gekennzeichnet dadurch, daß jede Leiste (15) aus einem Strangpreßprofil aus Aluminium besteht, daS die Gleitschiene jeder Leiste (15) in einer Richtung weist, und daß eine weitere, in die entgegengesetzte Richtung weisende Gleitschiene vorgesehen ist, so daß die beiden Leisten (15) durch Abstandshalter (20) miteinander verbunden sind.

4. Anordnung zur Bestimmung der Korrosion eines Bauwerks, mit einem Bauwerk, in das ein korrodierendes Teil eingebettet ist, gekennzeichnet durch eine Vorrichtung nach einem der Ansprüche 1 bis 3, wobei die Vorrichtung an einer Oberfläche des Bauerks zur Bestimmung von Potentialunterschieden und somit von Korrosion des innerhalb des Bauwerks gelegenen Teils, angewendet ist.

FIG.1.

FIG.1A.

FIG. 2.

FIG. 3.

FIG.4.

FIG.5.

10

16

FIG.6.

FIG.7.